# EUROPÄISCHE PATENTANMELDUNG

(11) **EP 3 611 876 A1**
(43) Veröffentlichungstag der Anmeldung: **19.02.2020**
(21) Anmeldenummer: 18188735.7
(22) Anmeldetag: 13.08.2018
(51) Int. Cl.: H04L 12/24, H04L 29/12

(54) **VERFAHREN ZUR KONFIGURATION, VERFAHREN ZUR BEREITSTELLUNG VON TOPOLOGIE-INFORMATIONEN, VERWENDUNG, GERÄT, COMPUTERPROGRAMM UND COMPUTERLESBARES MEDIUM**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)

(57) **Zusammenfassung**

Die Erfindung betrifft ein Verfahren zur Konfiguration eines zu taufenden Gerätes (2) in einem insbesondere industriellen Netzwerk, bevorzugt einer industriellen Automatisierungsanlage, bei dem
a) das zu taufende Gerät (2) von einem Nachbargerät (1, 3) eine Nachbar-Namensnachricht (8) empfängt,
b) ein Selbsttaufe-Modul (7) des zu taufenden Gerätes (2) auf Basis der Nachbar-Namensnachricht (8) einen topologischen Nachbar-Domain-Namen erstellt,
c) das Selbsttaufe-Modul (7) den topologischen Nachbar-Domain-Namen an einen Namensdienst-Server, insbesondere einen DNS-Server (9), bevorzugt im Rahmen einer DNS Query (10), übermittelt,
d) das Selbsttaufe-Modul (7) von dem Namensdienst-Server (9) insbesondere im Rahmen einer weiteren DNS Query eine Antwort-Nachricht (11), welche wenigstens einen zu dem topologischen Nachbar-Domain-Namen gehörenden Gerätenamen des zu taufenden Gerätes (2) umfasst, erhält, und
e) wenigstens ein Gerätename aus der Antwort-Nachricht (11) dem zu taufenden Gerät (2) zugewiesen, dieser insbesondere von dem Selbsttaufe-Modul (7) auf dem zu taufenden Gerät (2) als Gerätename gespeichert wird.

Darüber hinaus betrifft die Erfindung ein Verfahren zur Bereitstellung von Topologie-Informationen, die Verwendung eines Namensdienst-Servers (9), ein Gerät (1, 2, 3), ein Computerprogramm und ein computerlesbares Medium.

## Beschreibung

Die Erfindung betrifft ein Verfahren zur Konfiguration eines zu taufenden Gerätes in einem insbesondere industriellen Netzwerk, bevorzugt einer industriellen Automatisierungsanlage. Darüber hinaus betrifft die Erfindung ein Verfahren zur Bereitstellung von Topologie-Informationen, die Verwendung eines Namensdienst-Servers, ein Gerät, ein Computerprogramm und ein computerlesbares Medium.

Im Bereich von Netzwerken, insbesondere industriellen Netzwerken, kommt den Namen der Netzwerkteilnehmer zunehmend eine zentrale Rolle in der Identifikation von Geräten sowie der Identifikation von Funktionen und dergleichen zu. Der auf die Anmelderin zurückgehende Industrial-Ethernet-Standard für die Automatisierung - PROFINET - benutzt seit Anbeginn solche Namen zur führenden Identifikation insbesondere von IO-Geräten (IO-Devices), und nicht etwa IP-Adressen.

Vor allem in demjenigen Fall, dass ein einen Netzwerkteilnehmer darstellendes Gerät ausgetauscht wird, ist es, wenn Namen anstelle von IP-Adressen zur Identifikation herangezogen werden, besonders wichtig, dass das noch leere Austauschgerät möglichst schnell seinen korrekten, eindeutigen Namen erhält. Dieser Prozess wird insbesondere im Umfeld von PROFINET auch als "taufen" bezeichnet. Im Falle eines Gerätetauschs ist also eine Rasche "Wiedertaufe" wünschenswert bzw. erforderlich.

Eine Möglichkeit, Geräte zu "taufen" besteht in einer sogenannten "topologischen" Taufe, die vom Prinzip her auf der Netzwerk-Verkabelung der Geräte untereinander basiert.

Der Anmelderin ist bekannt, dass in PROFINET eine (quasi-)zentralisierte Form einer topologischen Taufe umgesetzt ist. Dabei wird im Zuge der Planung einer Automatisierungsapplikation mit einem Engineering-Werkzeug auch die Netzwerk-Verschaltung der Automatisierungsgeräte erfasst. Aus dieser Verschaltung der Geräte in Verbindung mit den Gerätenamen berechnet das Planungswerkzeug eine Liste sogenannter Alias-Namen. Dabei besitzt ein bestimmtes Gerät maximal so viele Alias-Namen, wie es Ethernet-Ports hat. Ein Alias-Name besteht aus einem Portnamen, an den der Gerätename des Nachbarn angefügt wird. Für einen Port mit dem Portnamen "port001" und einen Gerätename "io-2.hall1.acme.com" beispielsweise würde sich dann "port001" plus "io-2.hall1.acme.com" als Alias-Name für das an den Port "port001" angeschlossene Gerät "io-3.hall1.acme.com" ergeben.

Die einzelnen Geräte erfahren, sobald sie in ein Netzwerk eingebracht worden sind, die Namen ihrer Nachbarn über das Link Layer Discovery Protocol (LLDP), das insbesondere in IEEE 802.1AB definiert ist. Gemäß der vorgenannten Regel "Port-Name plus Name des Nachbargerätes" kann sich dann jedes noch ungetaufte Gerät seine Alias-Namen berechnen. Die einzelnen Geräte kennen dabei nicht die Alias-Namen-Liste. Diese ist nur dem zentralen Planungstool bekannt, welches diese berechnet hat.

Das Planungstool muss die Alias-Namen-Liste in einen PROFINET IO-Controller (IOC) laden. Auf Basis der geladenen Liste versucht der IO-Controller dann ständig, noch ungetaufte Geräte anhand ihrer Alias-Namen aufzufinden. Wird eines oder werden mehrere noch ungetaufte Geräte anhand der Alias-Namen gefunden, werden diese mit dem Namen getauft, der zuvor im Planungswerkzeug dem jeweiligen Alias-Namen zugewiesen wurde. Im Kontext vom IPv4 werden zudem oftmals weiterhin diverse IPv4-Parameter zugewiesen, beispielsweise IPv4-Adresse, Netzmaske, Default Gateway und dergleichen mehr.

Die in PROFINET vorgesehene topologische Taufe benötigt immer einen (quasi-)zentralen IO-Controller, der das Aufspüren ungetaufter Geräte durchführt und diese dann tauft.

Im generellen IT-Bereich, insbesondere im Büro-Umfeld, wird oftmals das Dynamic Host Configuration Protocol (DHCP) (siehe Request for Comments (RFC) 2131 "Dynamic Host Configuration Protocol" sowie RFC 3315 "Dynamic Host Configuration Protocol for IPv6 (DHCPv6)" der Internet Engineering Task Force (IETF)) eingesetzt. Dieses ermöglicht es ebenfalls, einem Gerät einen "Host-Namen" (Gerätenamen) zuzuweisen.

Dabei wird jedoch teilweise als nachteilig erachtet, dass DHCP die Hardware-Netzwerk-Adresse (MAC) eines Gerätes als eindeutigen Schlüssel benutzt. Wird ein Gerät ausgetauscht, ändert sich auch die MAC-Adresse, so dass eine automatische Taufe große administrative Aufwände verursachen würde. Aus diesem Grunde wird DHCP nach Kenntnisstand der Anmelderin in der Regel mit Geräten eingesetzt, die bereits bei ihrer Systemgenerierung einen eindeutigen Namen erhalten haben.

Es ist eine Aufgabe der vorliegenden Erfindung, eine Möglichkeit für eine automatische Selbsttaufe von Netzwerkgeräten mit Gerätenamen anzugeben, die zuverlässig ist und sich gleichzeitig mit geringem Aufwand durchführen lässt.

Diese Aufgabe wird gelöst durch ein Verfahren zur Konfiguration eines zu taufenden Gerätes in einem insbesondere industriellen Netzwerk, bevorzugt einer industriellen Automatisierungsanlage, bei dem
a) das zu taufende Gerät von einem Nachbargerät eine Nachbar-Namensnachricht empfängt, welche zumindest einen Gerätenamen des Nachbargerätes und optional einen Namen desjenigen Ports des Nachbargerätes, über welchen die Nachbar-Namensnachricht an das zu taufende Gerät gesendet wird oder wurde, umfasst,
b) ein Selbsttaufe-Modul des zu taufenden Gerätes auf Basis der Nachbar-Namensnachricht einen topologischen Nachbar-Domain-Namen, welcher zumindest den empfangenen Nachbar-Gerätenamen und den optional empfangenen Nachbar-Portnamen und/ oder den Namen des Portes des zu taufenden Gerätes, über welchen das zu taufende Gerät die Nachbar-Namensnachricht empfangen hat, und einen insbesondere dem Selbsttaufe-Modul bekannten, vorgegebenen weiteren Namensteil umfasst, erstellt,
c) das Selbsttaufe-Modul den topologischen Nachbar-Domain-Namen an einen Namensdienst-Server, insbesondere einen DNS-Server, bevorzugt im Rahmen einer DNS Query, übermittelt,
d) das Selbsttaufe-Modul von dem Namensdienst-Server insbesondere im Rahmen einer weiteren DNS Query eine Antwort-Nachricht, welche wenigstens einen zu dem topologischen Nachbar-Domain-Namen gehörenden Gerätenamen des zu taufenden Gerätes umfasst, erhält, und
e) wenigstens ein Gerätename aus der Antwort-Nachricht dem zu taufenden Gerät zugewiesen, dieser insbesondere von dem Selbsttaufe-Modul auf dem zu taufenden Gerät als Gerätename gespeichert wird.

Darüber hinaus wird die Aufgabe gelöst durch ein Gerät, insbesondere Automatisierungsgerät, welches zur Durchführung des erfindungsgemäßen Verfahrens ausgebildet und eingerichtet ist.

Dabei ist bevorzugt vorgesehen, dass das Gerät wenigstens einen Port aufweist, über den es mit einem Port eines weiteren, ein Nachbar-Gerät darstellenden Gerätes verbindbar oder verbunden ist, und das Gerät ein Selbsttaufe-Modul aufweist, welches dazu ausgebildet und/oder eingerichtet ist, um
a) auf Basis einer von einem Nachbargerät an das Gerät gesendeten Nachbar-Namensnachricht, die zumindest einen Gerätenamen des Nachbargerätes und optional einen Namen desjenigen Ports des Nachbargerätes, über welchen die Nachbar-Namensnachricht an das Gerät gesendet wird oder wurde, umfasst, einen topologischen Nachbar-Domain-Namen, welcher zumindest den empfangenen Nachbar-Gerätenamen und den optional empfangenen Nachbar-Portnamen und/oder den Namen des Portes des Gerätes, über welchen das Gerät die Nachbar-Namensnachricht empfangen hat, und einen insbesondere dem Selbsttaufe-Modul bekannten, vorgegebenen weiteren Namensteil umfasst, erstellt,
b) den topologischen Nachbar-Domain-Namen an einen Namensdienst-Server, insbesondere einen DNS-Server, bevorzugt im Rahmen einer DNS Query, zu übermitteln,
c) von dem Namensdienst Sever insbesondere im Rahmen einer weiteren DNS Query eine Antwort-Nachricht, welche wenigstens einen zu dem topologischen Nachbar-Domain-Namen gehörenden Gerätenamen des Gerätes umfasst, zu erhalten, und
d) wenigstens einen Gerätename aus der Antwort-Nachricht dem Gerät zuzuweisen, insbesondere auf dem Gerät als Gerätenamen zu speichern.

Die vorliegende Erfindung nutzt somit einen Server für einen Namensdienst, insbesondere einen Domain Name System (DNS) Server für die Bereitstellung von Topologie-Informationen für eine dezentrale, selbständige topologische Gerätetaufe.

Unter einer Taufe ist dabei insbesondere die Zuweisung eines Geräte-, insbesondere Hostnamens zu einem Gerät und/oder der Empfang eines Geräte-, insbesondere Hostnamens von einem Gerät und/oder die Speicherung eines Geräte-, insbesondere Hostnamens auf einem Gerät zu verstehen.

Unter einem zu taufenden Gerät ist bevorzugt ein solches zu verstehen, für das ein Gerätename (noch) zu vergeben ist, insbesondere, weil es noch keinen Gerätenamen erhalten hat bzw. noch kein Gerätename gesetzt ist. Ein zu taufendes Gerät kann sich durch eine auf dem Gerät gespeicherte, noch leere Namensdatei bzw. einen auf dem Gerät gespeicherten, noch leeren Namens-String auszeichnen. In einem Zustand ohne Namen befindet sich ein Gerät beispielsweise bevor es das erste Mal in einem Netzwerk in Betrieb genommen wurde, etwa im Auslieferungszustand.

Ein Geräte- oder auch Hostname, welcher einem Gerät unter Durchführung des erfindungsgemäßen Verfahrens für dessen Taufe zugewiesen und insbesondere darauf gespeichert wird, ist bevorzugt ein (global) eindeutiger Name, insbesondere ein voll qualifizierter Domain Name, besonders bevorzugt ein voll qualifizierter Domain Name im Sinne von dem RFC 7719 (Request for Comments: 7719 der Internet Engineering Task Force Group (IETF), https://tools.ietf.org/html/rfc7719).

Werden einem Namensdienst-Server bzw. Domain Name System die aus einer konkreten Netzwerk-Schaltung resultierenden Nachbarschaftsbeziehungen, also Topologie-Informationen bekannt gemacht bzw. diese Informationen einem Namensdienst-Server bzw. in einem Domain Name System bereitgestellt, kann ein noch ungetauftes Gerät sehr einfach, etwa über eine DNS Query, auf diese Informationen zugreifen.

Ist Zugriff auf die Topologie-Informationen des Netzwerks möglich, reicht es aus, wenn ein noch ungetauftes Gerät, beispielsweise sobald es mit dem Netzwerk verbunden wird, von einem einzigen benachbarten Gerät, das seinen Gerätenamen bereits kennt, den Gerätenamen und den Namen desjenigen Ports des benachbarten Gerätes, über den das ungetaufte Gerät mit dem benachbarten Gerät verbunden ist, erfährt. In Kenntnis des Nachbar-Gerätenamens und Nachbar-Port-Namens und der Nachbarschaftsbeziehungen kann dann auf einfache Weise der eigene Gerätename von dem Gerät ermittelt werden.

Die Erfindung baut auf der bereits im Rahmen von PROFINET umgesetzten zentralisierten Form einer topologischen Taufe auf, wobei jedoch gerade nicht auf einen zentralen PROFINET IO-Controller zugegriffen wird bzw. werden muss, um erforderliche Nachbarschaftsinformationen zu erhalten, sondern auf einen Namensdienst-Server. Auf einen zentralen Controller kann somit verzichtet werden.

Unter einem Namensdienst ist ein Dienst zu verstehen, welcher (numerischen) IP-Adressen, etwa IPv4 oder IPv6 IP-Adressen, den Namen zuordnet, insbesondere Domainnamen, von Geräten, Rechnern, Diensten usw.. Das Domain Name System (DNS) ist ein solcher Dienst, dessen Hauptaufgabe in der Regel in der Beantwortung von Anfragen zur Namensauflösung, also Übersetzung von Namen in Adressen, insbesondere in IP-basierten Netzwerken besteht. Zu dem DNS gehörige Standards sind insbesondere der RFC 1034 und RFC 1035. Ein Server, der einen Namensdienst anbietet, wird auch als Namensdienst-Server (engl.: Nameserver) bezeichnet, im Falle von DNS spricht man auch von einem DNS-Server. Der Namensdienst-Server, von dem erfindungsgemäß Topologie-Informationen für eine Selbsttaufe erhalten werden, kann ein lokaler Namensdienst-Server sein. Es ist unerheblich, "von wo aus" der DNS-Server seinen Dienst erbringt, er kann überall erbracht werden, solange IP-Erreichbarkeit (IP-Konnektivität) zu dem oder den erbringenden DNS-Server(n) besteht. "Lokal" kann beispielsweise im gleichen Subnetz oder auch irgendwo in einer Cloud beispielsweise eines Unternehmens sein. Diese Freiheit bzw. Unabhängigkeit ist ein wichtiger Charakterzug des DNS.

Die erfindungsgemäße Vorgehensweise ermöglicht es auch in Umgebungen, die von PROFINET unabhängig sind, eine automatische Selbsttaufe von Geräten durchzuführen. Dabei ist die Lösung dezentral. Jedes Gerät ist eigenständig in der Lage, sich selbst zu taufen, sobald über Standardmechanismen insbesondere IP- bzw. DNS-Konnektivität besteht. Die Umsetzung ist dabei ad-hoc. Die Topologie-Informationen können nicht nur wie bisher in einem Planungswerkzeug vorab erfasst werden, sondern mit einfachen Standard-Mitteln, beispielsweise auch in einem Testaufbau erfasst, "eingefroren" und in den Namensdienst, insbesondere ein Domain Name System, eingespielt werden. Ein weiterer Vorteil ist die Nutzbarkeit von Standardumgebungen. Die Informationen werden standardisiert und mit etablierten IT-Technologien bereitgestellt, insbesondere im Rahmen eines DNS.

In einem Netzwerk, von dem zumindest ein Teilnehmer noch nicht getauft ist, ist insbesondere jedes Gerät mit einem oder mehreren weiteren Geräten verbunden, es liegen insbesondere Punkt-zu-Punkt-links vor. Bevorzugt umfasst ein zu taufendes Gerät einen oder mehrere Ports, wobei gilt, dass jeder Port mit einem Port eines anderen am Netzwerk teilnehmenden Gerätes bevorzugt über ein Kabel verbunden ist. Beispielsweise sind mehrere Geräte per Ethernet verkabelt, wobei jedes Gerät zwei Ports aufweist. In einer Nachbarschaftsbeziehungs-Datei sind dann die Geräte-Namen aller Teilnehmer, insbesondere in Form von voll qualifizierten Domain Namen, zusammen mit topologischen Informationen in Form von den jeweiligen Nachbarschaftsbeziehungen abgelegt.

Wenn man - allein aus Gründen der Veranschaulichung - beispielhaft davon ausgeht, dass z.B. mehrere Geräte eines Netzwerkes in einer "geometrisch horizontalen" Linie verkabelt sind, wobei jedes Gerät einen "geometrisch linken" Port und einen "geometrisch rechten" Port aufweist, kann jedes Gerät etwa mit dem in der Linie linken Nachbarn über einen "linken" Port und mit dem rechten Nachbarn über einen "rechten Port" insbesondere über ein Kabel verbunden sein. In der wenigstens einen Nachbarschaftsbeziehungs-Datei wären dann die Informationen hinterlegt, dass der rechte Port P1 eines Gerätes G1 mit dem voll qualifizierten Domain Namen FQDN1 mit dem rechten Nachbar-Gerät G2 verbunden ist, wobei der voll qualifizierte Domain Name FQDN2 des rechten Nachbarn G2 in der Nachbarschaftsbeziehungs-Datei als zu dem Port P1 von Gerät G1 gehörig gespeichert ist.

Bei dem Netzwerk handelt es sich insbesondere um ein IPv6_Netzwerk (vgl. u.a. RFC 2460).

Existieren beispielsweise in einem IP-Subnetz viele "stückweise" Verbindungen (links), über die insbesondere jeweils ein Gerät mit einem Nachbargerät verbunden ist, spricht man auch von Punkt-zu-Punkt-links.

Das Selbsttaufe-Modul kann rein Software- oder rein Hardwareimplementiert oder auch durch eine Kombination geeigneter Hard- und Software gegeben sein. Das Selbsttaufe-Modul kann eine separate Funktionseinheit des Gerätes sein. Das Selbsttaufe-Modul kann als Software auf ohnehin in dem zu taufenden Gerät vorhandener Hardware, beispielsweis einem ohnehin vorhandenen Prozessor, laufen. Es kann aber auch Hardware speziell für das Selbsttaufe-Modul vorgesehen sein.

Ein vollständig qualifizierter Domain Name (FQDN) ist insbesondere ein solcher im Sinne von RFC 7719.

Bei dem Gerätenamen, der in Schritt a) von einem Nachbarn empfangen wird, kann es sich beispielsweise um einen PROFINET-Gerätenamen handeln, insbesondere einen Name of Station (NoS). Der Gerätename, der in Schritt a) von einem Nachbarn empfangen wird, kann ein vollständig qualifizierter Domain Name (FQDN) insbesondere im Sinne von dem RFC 7719 sein. Es kann sich auch um einen teilweise qualifizierten Domain Namen (PQDN) handeln, insbesondere im Sinne von RFC 7719.

Bei dem oder den Gerätenamen, die mit der Antwort-Nachricht empfangen werden, handelt es sich bevorzugt um einen vollständig qualifizierten Domain Namen (FQDN).

Der topologischen Nachbar-Domain-Name, welcher erstellt wird, umfasst insbesondere den empfangenen Nachbar-Gerätenamen und entweder den optional empfangenen Namen desjenigen Ports des Nachbargerätes, über welchen die Nachbar-Namensnachricht an das zu taufende Gerät gesendet wird bzw. wurde, oder den Namen des Portes des zu taufenden Gerätes, über welchen das zu taufende Gerät die Nachbar-Namensnachricht empfangen hat. Von den beiden Ports, über die jeweils zwei Nachbarn verbunden sind, reicht einer zur Bestimmung der Nachbarschaftsbeziehung aus. Besonders bevorzugt umfasst der topologischen Nachbar-Domain-Name den Nachbar-Gerätenamen und den Namen desjenigen Ports des Nachbargerätes, über welchen die Nachbar-Namensnachricht an das zu taufende Gerät gesendet wird bzw. wurde.

Auch wenn es nicht erforderlich ist, beide Ports zu kennen bzw. anzugeben, ist es jedoch auch nicht ausgeschlossen, dass sowohl der Sendeport des Nachbars als auch der Empfangsport des zu taufenden Gerätes in den topologischen Nachbar-Domain-Namen einfließt.

Ein zu taufendes bzw. ein erfindungsgemäßes Gerät kann beispielsweise in Form eines Automatisierungsgerätes vorliegen. Es kann sich zum Beispiel um ein IO-Gerät einer Automatisierungsanlage handeln.

Erhält das zu taufende Gerät in Schritt d) eine Antwort-Nachricht mit mehreren zu dem topologischen Nachbar-Domain-Namen gehörenden Gerätenamen, ist bevorzugt vorgesehen, dass diese alphabetisch sortiert und der oberste Gerätename dem zu taufenden Gerät als Gerätename zugewiesen wird.

Eine bevorzugte Ausführungsform des erfindungsgemäßen Verfahrens zeichnet sich dadurch aus, dass in Schritt a) eine Nachbar-Namensnachricht mit einem Nachbar-Gerätenamen empfangen wird, der durch einen teilweise qualifizierten Domain Namen (PQDN) oder einen vollständig qualifizierten Domain Namen (FQDN) gegeben ist. In diesem Falle überprüft das Selbsttaufe-Modul insbesondere, ob der Nachbar-Gerätename ein voll qualifizierter Domainname ist und übernimmt diesen, wenn dem so ist, in Schritt b) unverändert als Nachbar-Gerätenamen in den topologischen Nachbar-Domain-Namen. Für den Fall, dass der Nachbar-Gerätename ein teilweise qualifizierter Domain Name ist, erstellt das Selbsttaufe-Modul aus diesem durch Hinzufügung eines Suffixes, insbesondere eines DNS-Suffixes, einen voll qualifizierten Domain Namen und übernimmt diesen in Schritt b) als Nachbar-Gerätenamen in den topologischen Nachbar-Domain-Namen.

Es ist möglich, dass von einem Nachbar-Gerät eine Nachbar-Namensnachricht empfangen wird, die einen Nachbar-Gerätenamen umfasst, der nur lokal, insbesondere nur in dem Teilnetz, in dem sich das Nachbar-Gerät befindet, eindeutig ist. Dann stellt der Nachbar-Gerätename insbesondere einen (nur) teilweise qualifizierten Domain Namen (PQDN) dar. In diesem Fall erzeugt das Selbsttauf-Modul zunächst einen Nachbar-Gerätenamen, welcher (global) eindeutig ist. Dies kann in an sich bekannter Weise geschehen, indem dem teilweise qualifizierten Domain Namen wenigstens ein Suffix hinzugefügt wird.

Das zum Erhalt eines (global) eindeutigen Nachbar-Gerätenamen hinzuzufügende Suffix stellt zweckmäßiger Weise einen weiteren Namensbestandteil dar, der anzuhängen ist.

Das erfindungsgemäße Verfahren zeichnet sich in Weiterbildung dadurch aus, dass in Schritt a) eine Nachbar-Namensnachricht mit einem Nachbar-Gerätenamen empfangen wird, der durch einen teilweise qualifizierten Domain Namen (PQDN) gegeben ist, und dem teilweise qualifizierten Domain Namen ein Suffix angehängt wird, welches das Gerät über eine Router Advertisement Nachricht, bevorzugt eine Router Advertisement Nachricht gemäß IPv6 empfangen hat. Bevorzugt handelt es sich bei der wenigstens einen Router Advertisement Nachricht um eine solche gemäß dem RFC 4861.

Das zu taufende Gerät kann das Suffix beispielsweise unter Durchführung des Verfahrens erhalten haben, das in der ebenfalls auf die Anmelderin zurückgehenden EP 3 091 714 A1 beschrieben ist. Bei dem hinzuzufügenden Suffix handelt es sich dann insbesondere um einen in der EP 3 091 714 A1 als hierarchischen Namenskontext bzw. topologischen und/oder hierarchischen Namensbestandteil bezeichneten Bestandteil.

Ein Suffix kann insbesondere als Migrationspfad auch für eine existierende PROFINET-Infrastruktur mit nur lokal eindeutigen Namen dienen.

Eine weitere bevorzugte Ausführungsform des erfindungsgemäßen Verfahrens zeichnet sich dadurch aus, dass in Schritt b) der topologische Nachbar-Domain-Name nach dem Muster Portname gefolgt von einem Punkt gefolgt von dem vorgegebenen weiteren Namensteil gefolgt von einem Punkt gefolgt von dem Nachbar-Gerätenamen erstellt wird. Insbesondere diese Modellierung erlaubt als positiven Zusatzeffekt, die Vergabe mehrfacher Namen für das gleiche Gerät. Dann existieren insbesondere mehrere Pointer (PTR) Resource Records (RR) für den gleichen Domainnamen, bei dem es sich insbesondere um einen DNS owner Name bzw. DNS Domain Name handeln kann. Unter einem owner Namen ist dabei insbesondere ein Domain Name zu verstehen, welcher die zusätzliche Bedingung erfüllt, dass der auf der "linken" Seite einer RR-Definition, beispielsweise in einer Zonendatei steht. Domain Namen können auch an anderer Stelle (etwa der "rechten" Seite) auftreten, wie in den PTR RRS, SOAs, CNAMEs, usw..

Für beispielsweise einen Nachbar-Portnamen "port0001" und beispielsweise einen vorgegebenen weiteren Namensteil "_topo" und beispielsweise einen Nachbar-Gerätenamen "io-1.zelle1.elc." würde sich gemäß dem vorgenannten Muster ein topologischer Nachbar-Domain-Name "port0001._topo.io-1.zelle1.elc." ergeben.

Es kann vorgesehen sein, dass der vorgegebene weitere Namensbestandteil - wie in dem vorangegangen Beispiel - insbesondere an seinem Anfang einen Unterstrich aufweist. Der Unterstrich folgt dann bevorzugt dem speziellen Muster, wie es in dem RFC 6763 eingeführt wurde, um Kollisionen mit konventionellen Hostnamen in Kinddomains zu verhindern.

Eine weitere bevorzugte Ausführungsform des erfindungsgemäßen Verfahrens zeichnet sich dadurch aus, dass in Schritt a) das zu taufende Gerät von dem Nachbargerät eine Nachbar-Namensnachricht gemäß dem in IEEE 802.1AB definierten Link Layer Discovery Protocol (LLDP) empfängt.

Es hat sich gezeigt, dass für den Erhalt von Informationen über Namen und Port wenigstens eines Nachbarn auf das bewährte Link Layer Discovery Protocol zurückgegriffen werden kann.

Bei einem Nachbargerät handelt es sich insbesondere um ein Nachbargerät bzw. einen Nachbarn ("neighbor") im Sinne des LLDP Protokolls bzw. IEEE 802.1AB.

Es kann insbesondere ein sogenannter Port Description TVL vom Typ 4 zwischen Nachbarn per LLDP übertragen werden. Der Inhalt (Wert) eines Port Description TVL folgt dann bevorzugt einer festgelegten Form "<port>.<nos>" Der Anteil <port> entspricht dabei dem Portnamen, kann beispielsweise "port001", "port002" usw. lauten. Der Anteil <nos> entspricht einem Hostnamen und kann einen oder mehrere Label umfassen, bis hin zum voll qualifizierten Domain Namen (FQDN).

Wird eine Nachbar-Namensnachricht empfangen, die einen Nachbar-Gerätenamen umfasst, der nur lokal, insbesondere nur in dem Teilnetz, in dem sich das Nachbar-Gerät befindet, eindeutig ist, muss dann ggf. eine Erweiterung auf den hierarchischen Kontext erfolgen, was, wie vorstehend beschrieben, durch Hinzufügen eines Suffixes möglich ist.

In Weiterbildung kann ferner vorgesehen sein, dass in Schritt e) der Gerätename von dem Selbsttaufe-Modul aus der Antwort-Nachricht extrahiert wird.

Die in Schritt d) empfangene Antwort-Nachricht kann weiterhin wenigstens einen Pointer (PTR) Resource Record (RR) umfassen oder durch einen solchen gegeben sein. Bei dem Pointer bzw. Pointer Record handelt es sich insbesondere um einen solchen gemäß RFC gemäß dem RFC 1035.

Gegenstand der vorliegenden Erfindung ist ferner ein Verfahren zur Bereitstellung von Topologie-Informationen für die Selbsttaufe von Geräten in einem insbesondere industriellen Netzwerk, bevorzugt einer Automatisierungsanlage, bei dem auf einem Namensdienst-Server, insbesondere einem Domain Name System (DNS) Server wenigstens eine Nachbarschaftsbeziehungs-Datei, insbesondere in Form einer bevorzugt standardisierten Zonendatei bereitgestellt wird, wobei die wenigstens eine Nachbarschaftsbeziehungs-Datei eine Liste mit Nachbarschaftsbeziehungs-Einträgen für Geräte des Netzwerkes umfasst, wobei jeder Nachbarschaftsbeziehungs-Eintrag einen insbesondere voll qualifizierten Domain Namen des jeweiligen Gerätes und wenigstens einen zugehörigen topologischen Nachbar-Domain-Namen, der einen insbesondere voll qualifizierten Domain Namen eines zu dem jeweiligen Gerät benachbarten Nachbargerätes als Nachbar-Gerätenamen und den Namen des Portes des Nachbargerätes, mit dem das jeweilige Gerät verbunden ist, und/oder den Namen des Portes des jeweiligen Gerätes, über den es mit dem Nachbar-Gerät verbunden ist, als Nachbar-Portnamen und insbesondere wenigstens einen vorgegebenen weiteren Namensbestandteil aufweist, umfasst.

In Weiterbildung des erfindungsgemäßen Verfahrens zur Bereitstellung von Topologie-Informationen kann vorgesehen sein, dass jeder Nachbarschaftsbeziehungs-Eintrag durch ein Pointer (PTR) Resource Record (RR) gegeben ist oder einen solchen umfasst, wobei bevorzugt jeder Pointer Resource Record von einem topologischen Nachbar-Domain-Namen auf einen voll qualifizierten Domain Namen eines Gerätes zeigt.

Weiterhin kann vorgesehen sein, dass der topologische Nachbar-Domain-Name in jedem Nachbarschaftsbeziehungs-Eintrag dem Muster Portname gefolgt von einem Punkt gefolgt von dem vorgegebenen weiteren Namensteil gefolgt von einem Punkt gefolgt von dem Nachbar-Gerätenamen erstellt wird.

Es stehen verschiedene Möglichkeiten zur Verfügung, um die Informationen über die Topologie einem Namensdienst bzw. einem Namensdienst-Server bereitzustellen bzw. an diesen zu übermitteln, also eine (Topologie-)Registrierung durchzuführen.

So zeichnet sich eine weitere Ausführungsform des erfindungsgemäßen Verfahrens zur Bereitstellung von Topologie-Informationen dadurch aus, dass wenigstens eine Nachbarschaftsbeziehungs-Datei von einem zentralen Engineering-Werkzeug, mit welchem das Netzwerk, an dem die zu den Nachbarschaftsbeziehungs-Einträgen gehörigen Geräte teilnehmen, aufgebaut wurde, bereitgestellt und anschließend an den Namensdienst-Server übertragen wird.

Topologie-Informationen werden bevorzugt in Form einer sogenannten Zonendatei, insbesondere standardisierten Zonen-Datei aus dem Engineering-Werkzeug exportiert und anschließend in einen Namensdienst-Server, insbesondere DNS-Server importiert.

Es kann beispielsweise ein direkter Transfer von DNS-Daten mit Hilfe der DNS UPDATE-Operation, insbesondere gemäß dem RFC 2136 "Dynamic Updates in the Domain Name System (DNS UPDATE))" erfolgen. Hierbei wird der zuständige primäre DNS-Server automatisch anhand der FQDN(s) der Geräte ermittelt. Dabei wird zunächst die Zone ermittelt, wobei QUERY FQDN IN SOA den zuständigen SOA und damit die Zone, in der sich FQDN befindet, liefert.

Dann wird der primäre DNS-Servers aus dem SOA RR "MNAME" bestimmt (siehe RFC 1035, "DOMAIN NAMES - IMPLEMENTATION AND SPECIFICATION" und RFC 2181, "Clarifications to the DNS Specification"). Dann erfolgt ein Update der DNS Informationen per DNS UPDATE in die zuvor bestimmte Zone.

Auf Wunsch werden bei dieser Übertragung möglicherweise veraltete Informationen gleichzeitig gelöscht.

Alternativ oder zusätzlich kann vorgesehen sein, dass wenigstens eine Nachbarschaftsbeziehungs-Datei von einem zentralen Online-Tool, von dem eine Topologie-Discovery eines gegebenen Netzwerkes durchgeführt und auf Basis des Ergebnisses der Topologie-Discovery die Nachbarschaftsbeziehungs-Datei erstellt wird, bereitgestellt, und anschließend an den Namensdienst-Server übertragen wird.

Eine Topologie-Discovery der Nachbarschafts-Struktur kann dann insbesondere auf ein Anwender-Kommando hin und/oder zeitlich gesteuert durchgeführt werden. Dies ist beispielsweise über Engineering- und/oder Planungswerkzeuge möglich. Auf Basis dieser Nachbarschaft werden dann bevorzugt die benötigten DNS-Informationen, die beispielsweise Pointer Resource Records (PTR RRs) umfassen oder durch solche gegeben sein können, berechnet. Danach können diese Daten online an den Namensdienst-Server und in das DNS übertragen werden, insbesondere durch die vorstehend beschriebene DNS UPDATE-Operation gemäß dem RFC 2136 und/oder per Zonendatei gemäß RFC 1035.

Ein (Stand-alone) Online-Tool kann beispielsweise durch einen Router zusammen mit einem (lokalen) DNS-Dienst bereitgestellt werden.

Ein Online-Tool für eine Topologie-Discovery kann auch in einer Cloud bereitgestellt sein.

Das (Stand-alone) Online-Tool kann dabei z.B. als Webserver-Applikation oder auch als WEB-API mit zugehöriger Smartphone-App ausgeführt sein.

Weiterhin alternativ oder zusätzlich kann vorgesehen sein, dass wenigstens eine Nachbarschaftsbeziehungs-Datei auf Basis von Nachbarschafts-Informationen erstellt wird, die von denjenigen Geräten eines Netzwerkes an den Namensdienst-Server übermittelt werden, die ihren Geräte-Namen nicht unter Durchführung des erfindungsgemäßen Verfahrens zur Konfiguration sondern von einer externen Quelle, insbesondere via DCP oder DHCP oder von einem lokalen Namens-Vergabe-Mechanismus erhalten haben.

Dann kann eine automatische Eigenregistrierung der Geräte erfolgen, wobei die automatische Eigenregistrierung von der Selbsttaufe klar getrennt ist. Hierdurch kann sichergestellt werden, dass Falschverdrahtungen keine fehlerhafte Aktualisierung der Topologie-Informationen im Namensdienst, insbesondere DNS bedingen.

Eine Eigenregistrierung der Topologie-Information erfolgt nur dann, wenn die Quelle der Information eine externe Quelle bzw. Zuweisung ist. Die konkrete Quelle wird dabei jedoch nicht mit im Namensdienst registriert.

Ein Umlernen der Topologie ist damit weiterhin möglich, indem der Geräte-"Hostname" zunächst absichtlich rückgesetzt und danach erneut gesetzt wird. Dieser Weg ist aber eher für kleine Änderungen praktikabel. Bei umfangreicheren Änderungen dürften die vorgenannten beiden anderen Varianten eher zu bevorzugen sein.

Soll eine automatische Eigenregistrierung erfolgen, kann beispielsweise vorgesehen sein, dass die Geräte eines Netzwerkes jeweils einen Namensdienst Client umfassen, welcher an den Namensdienst-Server insbesondere regelmäßig Updates, insbesondere DNS-Updates sendet, über welche Einträge in der auf dem Namensdienst-Server gespeicherten Nachbarschaftsbeziehungs-Datei aktualisiert werden. Umfasst die Nachbarschaftsbeziehungs-Datei die Topologie des Netzwerkes beschreibenden Pointer (PTR) Resource Records (RR), ist insbesondere vorgesehen, dass diese bevorzugt regelmäßig über Updates aktualisiert werden, welche von Namensdienst Clients der Geräte gesendet werden. Dabei wird insbesondere zumindest der Informationsgehalt gemäß der genormten RFC 1034/1035 Darstellung gesendet. Gesendete Updates können insbesondere die PTRs umfassen.

Für die interne Darstellung von Resource Records in einem DNS gibt es unterschiedliche Möglichkeiten, beispielsweise können diese als Speicher-Zeiger oder Datenbank-Einträge oder JSONs vorliegen.

In der auf die Anmelderin zurückgehenden EP 3 091 714 A1 sind Geräte beschrieben, die Namensdienst Clients umfassen, die DNS Updates an einen DNS-Server senden, über welche auf dem DNS Sever gespeicherte Adress-Einträge (beispielweise AAAA ggf. A RRs, wobei AAAA eine IPv6- und A eine IPv4-Adresse ist) zu insbesondere voll qualifizierten Domain Namen der Geräte aktuell gehalten werden.

Es kann vorgesehen sein, dass die Geräte eines Netzwerkes jeweils einen Namensdienst Client aufweisen, über welchen Adress-Einträge zu insbesondere voll qualifizierten Domain Namen der Geräte, etwa wie in der EP 3 091 714 A1 beschrieben, und die Topologie des Netzwerkes beschreibenden Pointer (PTR) Resource Records (RR) gemeinsam gepflegt werden. Auch ist es möglich, dass die Geräte jeweils getrennte Namensdienst Clients aufweisen, welche die von Ihnen gepflegten Adress-Einträge (etwa wie in EP 3 091 714 A1 beschrieben) bzw. PTR RRs eigenständig verantworten.

Im Rahmen des erfindungsgemäßen Verfahrens zur Konfiguration eines zu taufenden Gerätes erhält das zu taufende Gerät in Schritt d) bevorzugt eine Antwort von einem Namensdienst-Server erhält, auf dem wenigstens eine Nachbarschaftsbeziehungs-Datei unter Durchführung des vorstehend beschriebenen erfindungsgemäßen Verfahrens zur Bereitstellung von Topologie-Informationen bereitgestellt wird bzw. wurde.

Gegenstand der vorliegenden Erfindung ist darüber hinaus die Verwendung eines Namensdienst-Servers, insbesondere DNS-Servers, zur Bereitstellung von Topologie-Informationen für die Selbsttaufe von Geräten in einem insbesondere industriellen Netzwerk, bevorzugt einer industriellen Automatisierungsanlage.

Weiterhin betrifft die Erfindung ein Computerprogramm, das Programmcodemittel zur Durchführung der Schritte des erfindungsgemäßen Verfahrens zur Konfiguration eines zu taufenden Gerätes bzw. des erfindungsgemäßen Verfahrens zur Bereitstellung von Topologie-Informationen umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Konfiguration eines zu taufenden Gerätes bzw. des erfindungsgemäßen Verfahrens zur Bereitstellung von Topologie-Informationen durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Darstellung dreier Geräte eines industriellen Netzwerkes einer Automatisierungsanlage;
- FIG 2: eine rein schematische Darstellung dazu, wie die Topologie-Informationen im DNS Namensraum hinterlegt werden; und
- FIG 3: eine rein schematische Darstellung zur Übermittlung von Informationen über Nachbarschaftsbeziehungen an den Namensdienst-Server.

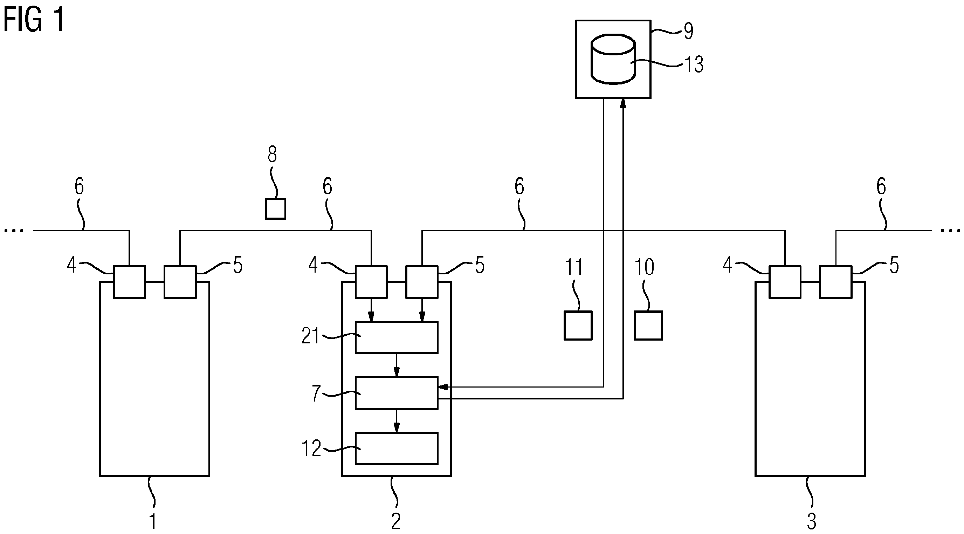

Die FIG 1 zeigt eine rein schematische Teildarstellung eines industriellen Netzwerkes konkret einer in den Figuren nicht weiter gezeigten Automatisierungsanlage. Dabei sind in der Teildarstellung von FIG 1 von der Vielzahl von Netzwerkteilnehmern beispielhaft nur drei Geräte 1, 2, 3 gezeigt, die im Rahmen des hier beschriebenen Ausführungsbeispiels in Form von IO-Geräten gegeben sind. Die drei Geräte 1, 2, 3 stellen Ausführungsbeispiele von erfindungsgemäßen Automatisierungsgeräten dar.

Jedes der drei Geräte 1, 2, 3 weist einen in der FIG 1 linken Port 4 und einen in der FIG 1 rechten Port 5 auf und die Geräte 1, 2, 3 sind derart miteinander verbunden, dass jeweils der linke Port 4 eines Gerätes 1, 2, 3 mit dem linken Nachbarn, konkret mit dessen rechtem Port 5, und der rechte Port 5 eines Gerätes 1, 2, 3 mit dem rechten Nachbarn, konkret dessen linkem Port 4, über ein Kabel 6 verbunden ist. Die drei Pünktchen am linken und rechten Ende der FIG 1 deuten an, dass das Netzwerk nur ausschnittsweise gezeigt ist und weitere Geräte folgen. In der FIG 1 ergibt sich entsprechend eine Verkabelung in einer "geometrisch horizontalen" Linie.

Vorliegend kommt in dem Netzwerk der Industrial Ethernet-Standard PROFINET zum Einsatz. PROFINET benutzt Namen - und nicht (nummerische) IP-Adressen - zur führenden Identifikation von IO-Geräten 1, 2, 3.

Vor allem in demjenigen Fall, dass ein Gerät 1, 2, 3, beispielsweise aufgrund eines Defektes, auszutauschen ist, ist es, wenn Namen anstelle von IP-Adressen zur Identifikation herangezogen werden, wichtig, dass ein zunächst noch leeres Austauschgerät möglichst schnell und ohne großen Aufwand seinen eindeutigen Namen erhält. Der Erhalt eines Namens wird im Umfeld von PROFINET auch als "taufen" bezeichnet.

Die vorliegende Erfindung bietet eine zuverlässige und gleichzeitig mit geringem Aufwand durchführbare Möglichkeit, insbesondere Austauschgeräte schnell und zuverlässig automatisch zu taufen.

Dafür umfasst jedes der drei Geräte 1, 2, 3 ein Selbsttaufe-Modul 7. Es sei angemerkt, dass in der FIG 1 beispielhaft nur für das mittlere Gerät 2 das Selbsttaufe-Modul 7 gezeigt ist. Es kann prinzipiell sein, dass sämtliche Geräte in einem Netzwerk ein Selbsttaufe-Modul 7 aufweisen oder nur ein Teil der Geräte, etwa nur Geräte, bei denen mit einem regelmäßigen Austausch zu rechnen ist.

Im Folgenden wird - ebenfalls beispielhaft - nur auf eine Selbsttaufe des mittleren Gerätes 2 eingegangen. Es sei betont, dass durch gleiche Abläufe eine Selbsttaufe auch der Geräte 1 und 3 sowie weiterer Geräte des Netzwerkes möglich ist.

Das Selbsttaufe-Modul 7 ist dazu ausgebildet und eingerichtet, um auf Basis einer von einem Nachbargerät 1, 3 an das Gerät 2 gesendeten Nachbar-Namensnachricht 8, die einen Gerätenamen des Nachbargerätes 1, 3 und einen Namen desjenigen Ports 4, 5 des Nachbargerätes 1, 3, über welchen die Nachbar-Namensnachricht 8 an das Gerät 2 gesendet wird bzw. wurde, umfasst, einen topologischen Nachbar-Domain-Namen (TNDN), welcher den empfangenen Nachbar-Gerätenamen, den empfangenen Nachbar-Portnamen und einen dem Selbsttaufe-Modul 7 bekannten, vorgegebenen weiteren Namensteil umfasst, zu erstellen.

Das Selbsttaufe-Modul 7 ist weiterhin ausgebildet und eingerichtet, um den topologischen Nachbar-Domain-Namen an einen Namensdienstserver 9, bei dem es sich vorliegend um einen DNS-Server handelt, im Rahmen einer DNS Query 10 zu übermitteln.

Es ist darüber hinaus ausgebildet und eingerichtet, um von dem DNS-Server 9 im Rahmen einer weiteren DNS Query eine Antwort-Nachricht 11 mit wenigstens einem Gerätenamen in Form eines voll qualifizierten Domain Namens (FQDN) (im Sinne von dem RFC 7719) zu erhalten, und einen Gerätenamen aus der Antwortnachricht 11 dem Gerät 2 zuzuweisen sowie auf dem Gerät 2 als Gerätenamen zu speichern. Ein bereits gespeicherter Gerätename ist in der FIG 1 rein schematisch durch ein Blockelement dargestellt, welches mit dem Bezugszeichen 12 versehen ist.

Damit die Selbsttaufe unter Rückgriff auf den DNS-Server 9 möglich ist, sind auf diesem Topologie-Informationen über das Netzwerk gespeichert. Dabei sind Informationen darüber abgelegt, welche Geräte Nachbarn sind, insbesondere welche Geräte direkt miteinander verbunden sind.

Die zusätzlich auf dem DNS-Server 9 bereitstehenden Topologie-Informationen sind in der FIG 1 durch ein mit dem Bezugszeichen 13 versehenes Element auf dem DNS-Server 9 angedeutet.

Bei dem hier beschriebenen Ausführungsbeispiel ist auf dem DNS-Server 9 konkret eine Nachbarschafts-Beziehungsdatei in Form einer standardisierten Zonendatei gemäß RFC 1034 und RFC 1035 abgelegt, welche die Topologie-Informationen umfasst. Die Zonendatei weist eine Mehrzahl von Nachbarschaftsbeziehungs-Einträgen auf, die jeweils durch ein Pointer (PTR) Resource Record (RR) gegeben sind. Dabei zeigt jeder Pointer Resource Record (PTR RR) von einem topologischen Nachbar-Domain-Namen auf einen voll qualifizierten Domain Namen eines Gerätes.

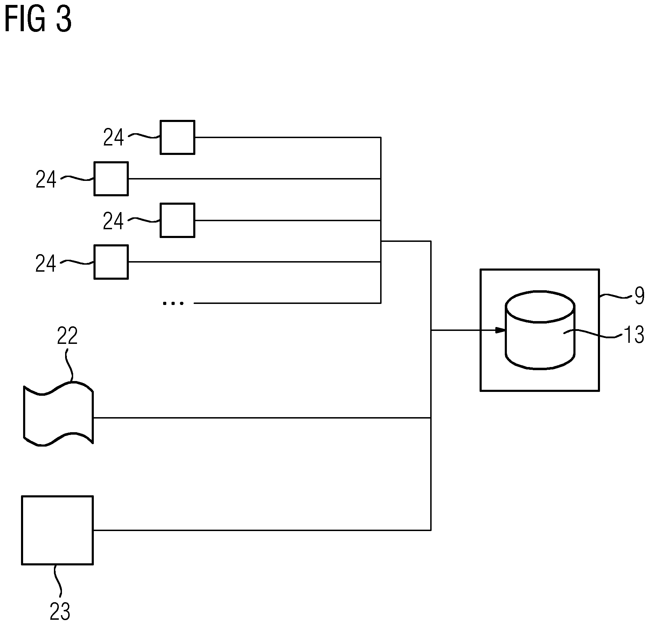

Davon ausgehend, dass das in FIG 1 linke Gerät 1 "io-1" heißt, das zu taufende mittleren Gerät 2 den Namen "io-2" zu erhalten hat und das in FIG 3 rechte Gerät 3 den Namen "io-3" hat, und der jeweils linke Port 4 den Namen "port0001" und der jeweils rechte Port 5 den Namen "port002" trägt, kann die Struktur der zugehörigen Zonendatei mit den Nachbarschaftsbeziehungen der folgenden auszugsweisen Darstellung entnommen werden:
port002._topo.io-1.zelle1.elc. IN PTR ioc-2.zelle1.elc.
port001._topo.io-2.zelle1.elc. IN PTR ioc-1.zelle1.elc.
port002._topo.io-2.zelle1.elc. IN PTR ioc-3.zelle1.elc.
port001._topo.io-3.zelle1.elc. IN PTR ioc-2.zelle1.elc.

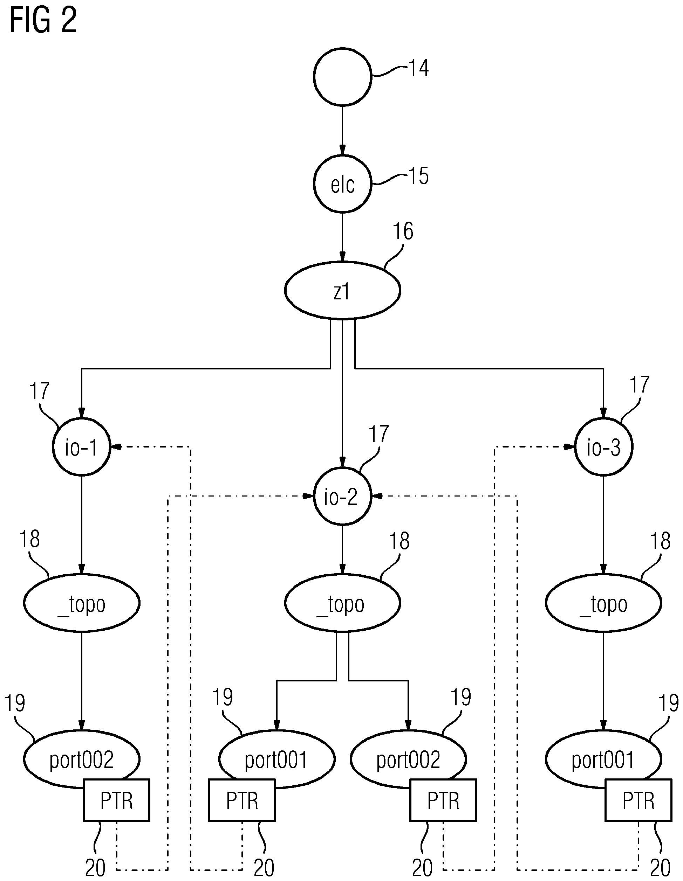

In der FIG 2 ist zur besseren Veranschaulichung rein schematisch dargestellt, wie die für die topologische Selbsttaufe erforderlichen Topologie-Informationen im DNS-Namensraum des DNS-Servers 9 hinterlegt sind. Man erkennt - mit dem Bezugszeichen 14 versehen - die Wurzel ("root") ".", mit dem Bezugszeichen 15 versehen die Toplevel Domain "elc", die hier rein beispielhaft mit der bereits angesprochenen Abkürzung für "Effortless Communciation" gewählt ist, mit dem Bezugszeichen 16 versehen die Secondlevel Domain "zelle1", die in der FIG 2 nur abgekürzt mit "z1" angegeben ist, mit dem Bezugszeichen 17 versehen die Gerätenamen io-1, io-2 und io-3. Das Label "_topo", welches in der FIG 2 mit der Bezugsziffer 18 versehen ist, gehört zu dem neuen (Unter-)Namensraum direkt unterhalb der voll qualifizierten Domain Namen der Geräte 1, 2, 3. Der führende Unterstich im Label folgt dabei einem speziellen Muster wie durch den RFC6763 eingeführt, um Kollision mit "normalen" Hostnamen in Kind-Domains zu verhindern. Es folgen die in FIG 2 mit der Bezugsziffer 19 versehenen Portnamen "port0001" und "port002" der Ports 4, 5 der Geräte 1, 2, 3 und die mit der Bezugsziffer 20 versehenen zugehörigen Pointer "PTR", die jeweils auf einen Nachbar-Gerätenamen in Form eines FQDN weisen. Mit strichpunktierten Pfeilen ist in der FIG 2 eingezeichnet, auf welchen Nachbarn der jeweilige Pointer 20 zeigt.

Darauf, wie die Topologie-Informationen im DNS bereitgestellt wurden, wird weiter unten noch näher eingegangen.

Die Selbsttaufe eines Gerätes unter Rückgriff auf diese Informationen im DNS kann wie folgt erfolgen.

Nachdem das Gerät 2 als Austauschgerät mit dem Netzwerk verbunden wurde, empfängt es von dem Nachbargerät 1 eine Nachbar-Namensnachricht 8 gemäß dem in IEEE802.1AB definierten Link-Layer Discovery Protocol (LLDP). Bei dem hier dargestellten Ausführungsbeispiel umfasst das Gerät 2 - sowie jedes weitere Gerät - ein LLDP-Modul 21, welches die Nachbar-Namensnachricht 8 empfängt und an das Selbsttaufe-Modul 7 weitergibt. In der FIG 1 ist dies über entsprechende Pfeile dargestellt. Die Nachbar-Namensnachricht 8 wird dabei über den rechten Port 5 des Nachbargerätes 1 gesendet und dem mit diesem via Kabel 6 verbundenen linken Port 4 des Gerätes 2 empfangen.

Es sei angemerkt, dass in der FIG 1 nur eine Nachbar-Namensnachricht 8 beispielhaft und schematisch gezeigt ist, welche von dem linken Nachbargerät 1 an das Gerät 2 gesendet wird. Selbstverständlich ist es alternativ oder zusätzlich gleichermaßen möglich, dass von dem rechten Nachbargerät 3 eine (weitere) Namensnachricht gesendet wird. Diese würde über den linken Port 4 des Nachbargerätes 3 gesendet und an dem rechten Port 5 des Gerätes 2 ankommen und ebenfalls von dem LLDP-Modul 21 empfangen. Auch für diesen Vorgang ist in der FIG 1 ein entsprechender Pfeil eingezeichnet, der den rechten Port mit dem LLDP-Modul 21 verbindet.

Von welchem Nachbargerät 1, 3 eine Nachbar-Namensnachricht 8 an das Gerät 2 gesendet wird, ist nicht relevant. Voraussetzung ist lediglich, dass ein die Nachbar-Namensnachricht 8 sendendes Nachbargerät 1, 3 seinen Namen kennt, also bereits getauft ist.

Die an das Gerät 2 gesendete Nachbar-Namensnachricht 8 umfasst entsprechend den Nachbarnamen "io-1.elc." und den Portnamen "port0002", über den die Nachricht 8 vom Nachbargerät 1 an das Gerät 2 gesendet wurde. Der Nachbarnamen "io-1.elc." stellt einen PROFINET-Gerätenamen, konkret eine Name of Station (NoS) dar.

Da es nicht immer der Fall ist, dass Nachbarnamen, die über Nachbar-Namensnachrichten 8 von Nachbargeräten 1, 3 gesendet werden, vollständig qualifizierte Domainnamen (FQDNs) darstellen, die (global) eindeutig sind, sondern es auch sein kann, dass nur in einem Teilnetz (lokal) eindeutige Gerätenamen vergeben werden, überprüft das Selbsttaufe-Modul 7, nachdem es einen Nachbargerätenamen empfangen hat, zunächst, ob es ein vollständiger oder nur teilweise qualifizierter Domainname (PQDN) ist.

Ob ein vollständig qualifizierter Domainname vorliegt kann beispielsweise daran erkannt werden, dass sich am rechten Ende eines empfangenen Nachbar-Gerätenamens ein Punkt befindet, wie es vorliegend der Fall ist.

Sollte eine solche Überprüfung - in Abweichung des hier beschriebenen Beispiels - ergeben, dass es sich nicht um einen vollständig sondern nur einen teilweise qualifizierten Domainnamen handelt, erstellt das Selbsttaufe-Modul 7 zunächst einen vollständig qualifizierten Domainnamen, in dem es dem empfangenen Nachbar-Gerätenamen ein Suffix, insbesondere ein DNS-Suffix anhängt:
if isFQDN(NoS) then FQDN:= NoS else FQDN:= NoS + "." + ELCSuffix.

Bei dem hier beschriebenen Beispiel wurde die Bezeichnung ELCSuffix gewählt, wobei ELC als Abkürzung von "Effortless Communication" steht.

Das DNS-Suffix kann dem Gerät 2, konkret dessen Selbsttaufe-Modul 7, zuvor über eine empfangene Router Advertisement Nachricht bekannt gemacht worden sein. Die zugehörigen Vorgänge sind beispielsweise in der ebenfalls auf die Anmelderin zurückgehenden EP 3 091 714 A1 beschrieben. Bei dem hinzuzufügenden Suffix handelt es sich dann insbesondere um den in der EP 3 091 714 A1 als hierarchischen Namenskontext bzw. topologischen und/oder hierarchischen Namensbestandteil bezeichneten Bestandteil.

Auf Basis des - ggf. durch Hinzufügung eines Suffixes erhaltenen - Geräte FQDNs und des Portnamens "port0002" des Ports 5, über den die Nachbar-Namensnachricht 8 vom Nachbargerät 1 gesendet wurde, erstellt das Selbsttaufe-Modul 7 anschließend nach dem folgenden Muster einen topologischen Nachbar-Domainnamen (TNDN):
TND:= LocalPortName + "." + "_topo" + "." + FQDN.

Nachdem der topologische Nachbar-Domainname nach dem vorstehend genannten Muster erstellt wurde, führt das Selbsttaufe-Modul 7 eine DNS Query 10 durch, um einen (ggf. mehrere) Verweis(e) auf den vollständig qualifizierten Domainnamen des zu taufenden Gerätes 2 zu bestimmen. In der FIG 1 ist die DNS Query rein schematisch durch einen von dem Selbsttaufe-Modul 7 zu dem DNS-Server 9 weisenden Pfeil und einem neben dem Pfeil befindliches, mit dem Bezugszeichen 10 versehenes Blockelement schematisch angedeutet.

Die Abfrage kann beispielsweise wie folgt sein:
PTRRRSET:= "QUERY" TNDN "IN" "PTR".

Über diese wird nach den Pointer (PTR) Resource Records (RRs) im "IN" Namensraum des DNS gesucht.

In Reaktion auf die DNS Query 10 erhält das Selbsttaufe-Modul 7 von dem DNS-Server 9 einen Resource Record Satz (RRSet) mit Pointer Resource Records (PTR RRs). Aus diesen extrahiert das Selbsttaufe-Modul 7 die Domainnamen, auf die die Pointer verweisen. Für den Fall, dass mehrere Domainnamen erhalten werden, können diese beispielsweise alphabetisch sortiert und der erste Name als Gerätename bzw. Host-Name für die Selbsttaufe des Gerätes 2 verwendet werden:
Hostname:= (sort(PTRRRSET))[1].

Der oberste Name wird dann dem Gerät 2 als eindeutiger Gerätename zugewiesen und in dem Gerät gespeichert. Wie bereits vorstehend angemerkt, ist der abgelegte eindeutige Gerätename, welcher mit Hilfe des Selbsttaufe-Moduls 7 ermittelt wurde, in der FIG 1 durch ein mit dem Bezugszeichen 12 versehenes Blockelement rein schematisch angedeutet.

Das "Gerät 2 ist dann "getauft" und kann erreicht werden.

Es stehen verschiedene Möglichkeiten zur Verfügung, um die Informationen über die Topologie dem DNS-Server 9 bereitzustellen bzw. an diesen zu übermitteln, also eine (Topologie-)Registrierung durchzuführen.

Vorliegend ist die Bereitstellung der Topologie-Informationen in Form der standardisierten Zonendatei unter Durchführung eines Ausführungsbeispiels des erfindungsgemäßen Verfahrens zur Bereitstellung von Topologie-Informationen für die Selbsttaufe von Geräten 1, 2, 3 in einem industriellen Netzwerk erfolgt.

Dabei wurde die vorstehend auszugsweise wiedergegebene Zonendatei dem DNS-Server 9 als Nachbarschafts-Beziehungsdatei von einem Engineering-Werkzeug, mit welchem das Netzwerk, an dem die in FIG 1 dargestellten Geräte 1, 2, 3 teilnehmen, aufgebaut wurde, übergeben.

Die Zonendatei ist dabei mittels dem zentralen Engineering-Werkzeug bereitgestellt und anschließend von dem DNS-Server 9 importiert.

Dieses ist in FIG 3 rein schematisch dargestellt. In dieser ist die bereitgestellt Zonendatei mit dem Bezugszeichen 22 versehen und über einen von dieser zu dem DNS-Server 9 zeigenden Pfeil ist der Import angedeutet.

Es kann beispielsweise auch ein direkter Transfer von DNS-Daten mit Hilfe der DNS UPDATE-Operation, insbesondere gemäß dem RFC 2136 "Dynamic Updates in the Domain Name System (DNS UPDATE))" erfolgen. Hierbei wird der zuständige primäre DNS-Server automatisch anhand der FQDN(s) der Geräte ermittelt. Dabei wird zunächst die Zone ermittelt, wobei QUERY FQDN IN SOA den zuständigen SOA und damit die Zone, in der sich FQDN befindet, liefert.

Dann wird der primäre DNS-Server aus dem SOA RR "MNAME" bestimmt (siehe RFC 1035, "DOMAIN NAMES - IMPLEMENTATION AND SPECIFICATION" und RFC 2181, "Clarifications to the DNS Specification"). Dann erfolgt ein Update der DNS Informationen per DNS UPDATE in die zuvor bestimmte Zone. Auf Wunsch werden bei dieser Übertragung möglicherweise veraltete Informationen gleichzeitig gelöscht.

Alternativ oder zusätzlich dazu, dass ein Engineering-Werkzeug herangezogen wird, kann eine Nachbarschaftsbeziehungs-Datei auch von einem zentralen Online-Tool, von dem eine Topologie-Discovery eines gegebenen Netzwerkes durchgeführt und auf Basis des Ergebnisses der Topologie-Discovery die Nachbarschaftsbeziehungs-Datei erstellt wird, bereitgestellt, und anschließend an den Namensdienst-Server übertragen werden.

Eine Topologie-Discovery der Nachbarschafts-Struktur kann dann insbesondere auf ein Anwender-Kommando hin und/oder zeitlich gesteuert durchgeführt werden. Dies ist beispielsweise über ein Engineering- und/oder Planungswerkzeug möglich. Auf Basis dieser Nachbarschaft werden dann bevorzugt die benötigten DNS-Informationen, beispielsweise die PTR RRs berechnet. Danach können diese Daten online an den Namensdienst-Server 9 und in das DNS übertragen werden, insbesondere durch die vorstehende beschriebene DNS UPDATE-Operation gemäß dem RFC 2136.

In FIG 3 ist ein Online-Topologie-Tool schematisch als mit dem Bezugszeichen 23 versehenes Blockelement dargestellt und über einen von diesem zu dem DNS-Server 9 weisenden Pfeil ist das DNS Update angedeutet.

Ein (Stand-alone) Online-Tool kann beispielsweise durch einen Router zusammen mit einem (lokalen) DNS-Dienst bereitgestellt werden. Das (Stand-alone) Online-Tool kann dabei z.B. als Webserver-Applikation oder auch als WEB-API mit zugehöriger Smartphone-App ausgeführt sein. Es kann auch in einer Cloud bereitstehen.

Schließlich kann alternativ oder zusätzlich eine Nachbarschaftsbeziehungsdatei auch auf Basis von Nachbarschaftsinformationen erstellt werden, die von denjenigen Geräten eines Netzwerkes an den DNS-Server 9 übermittelt werden, die ihren Gerätenamen nicht über eine vorstehend beschriebene Selbsttaufe erhalten haben sondern von einer externen Quelle, beispielsweise via DCP oder DHCP oder von einem lokalen Namensvergabemechanismus. In FIG 3 sind mehrere solcher Geräte beispielhaft mit der Bezugsziffer 24 versehen.

Dann kann eine automatische Eigenregistrierung der Geräte 1, 2, 3 erfolgen, wobei die automatische Eigenregistrierung von der Selbsttaufe klar getrennt ist. Hierdurch kann sichergestellt werden, dass Falschverdrahtungen keine fehlerhafte Aktualisierung der Topologie-Informationen im Namensdienst, insbesondere DNS bedingen.

Die erfindungsgemäße Vorgehensweise ermöglicht es, eine automatische Selbsttaufe von Geräten 1, 2, 3 durchzuführen. Dabei ist die Lösung dezentral. Jedes Gerät 1, 2, 3 ist eigenständig in der Lage, sich selbst zu taufen, sobald über Standardmechanismen insbesondere IP- bzw. DNS-Konnektivität besteht. Die Umsetzung ist dabei ad-hoc. Die Topologie-Informationen können nicht nur, wie bisher, in einem Planungswerkzeug vorab erfasst werden, sondern mit einfachen Standard-Mitteln, beispielsweise auch in einem Testaufbau erfasst, "eingefroren" und in den Namensdienst eingespielt werden. Ein weiterer Vorteil ist die Nutzbarkeit von Standardumgebungen. Die Informationen werden standardisiert und mit etablierten IT-Technologien bereitgestellt, vorliegend im Rahmen eines DNS.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Konfiguration eines zu taufenden Gerätes (2) in einem insbesondere industriellen Netzwerk, bevorzugt einer industriellen Automatisierungsanlage, bei dem
a) das zu taufende Gerät (2) von einem Nachbargerät (1, 3) eine Nachbar-Namensnachricht (8) empfängt, welche zumindest einen Gerätenamen des Nachbargerätes (1, 3) und optional einen Namen desjenigen Ports (4, 5) des Nachbargerätes (1, 3), über welchen die Nachbar-Namensnachricht (8) an das zu taufende Gerät (2) gesendet wird oder wurde, umfasst,
b) ein Selbsttaufe-Modul (7) des zu taufenden Gerätes (2) auf Basis der Nachbar-Namensnachricht (8) einen topologischen Nachbar-Domain-Namen, welcher zumindest den empfangenen Nachbar-Gerätenamen und den optional empfangenen Nachbar-Portnamen und/oder den Namen des Portes (4, 5) des zu taufenden Gerätes (1, 2, 3), über welchen das zu taufende Gerät (1, 2, 3) die Nachbar-Namensnachricht (8) empfangen hat, und einen insbesondere dem Selbsttaufe-Modul (7) bekannten, vorgegebenen weiteren Namensteil umfasst, erstellt,
c) das Selbsttaufe-Modul (7) den topologischen Nachbar-Domain-Namen an einen Namensdienst-Server, insbesondere einen DNS-Server (9), bevorzugt im Rahmen einer DNS Query (10), übermittelt,
d) das Selbsttaufe-Modul (7) von dem Namensdienst-Server (9) insbesondere im Rahmen einer weiteren DNS Query eine Antwort-Nachricht (11), welche wenigstens einen zu dem topologischen Nachbar-Domain-Namen gehörenden Gerätenamen des zu taufenden Gerätes (2) umfasst, erhält, und
e) wenigstens ein Gerätename aus der Antwort-Nachricht (11) dem zu taufenden Gerät (2) zugewiesen, dieser insbesondere von dem Selbsttaufe-Modul (7) auf dem zu taufenden Gerät (2) als Gerätename gespeichert wird.

2. Verfahren nach Anspruch 1,
**dadurch gekennzeichnet, dass** in Schritt a) eine Nachbar-Namensnachricht (8) mit einem Nachbar-Gerätenamen empfangen wird, der durch einen teilweise qualifizierten Domain Namen oder einen vollständig qualifizierten Domain Namen gegeben ist, und das Selbsttaufe-Modul (7) insbesondere überprüft, ob der Nachbar-Gerätename ein teilweise voll qualifizierter Domain Name ist und für den Fall, dass der Nachbar-Gerätename ein voll qualifizierter Domain Name ist, diesen in Schritt b) unverändert als Nachbar-Gerätenamen in den topologischen Nachbar-Domain-Namen übernimmt, und für den Fall, dass der Nachbar-Gerätename ein teilweise qualifizierter Domain Name ist, aus diesem durch Hinzufügung eines Suffixes, insbesondere eines DNS-Suffixes, einen voll qualifizierten Domain Namen erstellt und den erstellten voll qualifizierten Domain Namen in Schritt b) als Nachbar-Gerätenamen in den topologischen Nachbar-Domain-Namen übernimmt.

3. Verfahren nach Anspruch 2,
**dadurch gekennzeichnet, dass** in Schritt a) eine Nachbar-Namensnachricht (8) mit einem Nachbar-Gerätenamen empfangen wird, der durch einen teilweise qualifizierten Domain Namen gegeben ist, und dem teilweise qualifizierten Domain Namen ein Suffix angehängt wird, welches das Gerät über eine Router Advertisement Nachricht, bevorzugt eine Router Advertisement Nachricht gemäß IPv6 empfangen hat.

4. Verfahren nach einem der vorhergehenden Ansprüche, **dadurch gekennzeichnet, dass** in Schritt b) der topologische Nachbar-Domain-Name nach dem Muster Portname gefolgt von einem Punkt gefolgt von dem vorgegebenen weiteren Namensteil gefolgt von einem Punkt gefolgt von dem Nachbar-Gerätenamen erstellt wird.

5. Verfahren nach einem der vorhergehenden Ansprüche, **dadurch gekennzeichnet, dass** der vorgegebenen weitere Namensteil insbesondere an seinem Anfang einen Unterstrich aufweist.

6. Verfahren nach einem der vorhergehenden Ansprüche, **dadurch gekennzeichnet, dass** in Schritt a) das zu taufende Gerät (2) von dem Nachbargerät (1, 3) eine Nachbar-Namensnachricht (8) gemäß dem in IEEE 802.1AB definierten Link Layer Discovery Protocol empfängt.

7. Verfahren nach einem der vorhergehenden Ansprüche, **dadurch gekennzeichnet, dass** in Schritt e) der Gerätename von dem Selbsttaufe-Modul (7) aus der Antwort-Nachricht (8) extrahiert wird.

8. Verfahren nach einem der vorhergehenden Ansprüche, **dadurch gekennzeichnet, dass** die in Schritt d) empfangene Antwort-Nachricht (8) wenigstens eine Pointer Resource Record umfasst oder durch einen solchen gegeben ist.

9. Verfahren nach einem der vorhergehenden Ansprüche, **dadurch gekennzeichnet, dass** der Nachbar-Gerätenamen, der in Schritt a) empfangen wird, ein PROFINET-Gerätename ist, insbesondere ein Name of Station.

10. Verfahren nach einem der vorhergehenden Ansprüche, **dadurch gekennzeichnet, dass** das zu taufende Gerät (2) in Schritt d) eine Antwort von einem Namensdienst-Server (9) erhält, auf dem wenigstens eine Nachbarschaftsbeziehungs-Datei unter Durchführung des Verfahrens nach einem der Ansprüche 11 bis 16 bereitgestellt wird bzw. wurde.

11. Verfahren zur Bereitstellung von Topologie-Informationen für die Selbsttaufe von Geräten (1, 2, 3) in einem insbesondere industriellen Netzwerk, bevorzugt einer industriellen Automatisierungsanlage, bei dem auf einem Namensdienst-Server, insbesondere einem DNS-Server (9) wenigstens eine Nachbarschaftsbeziehungs-Datei, insbesondere in Form einer bevorzugt standardisierten Zonendatei (22) bereitgestellt wird, wobei die wenigstens eine Nachbarschaftsbeziehungs-Datei (22) eine Liste mit Nachbarschaftsbeziehungs-Einträgen für Geräte (1, 2, 3) des Netzwerkes umfasst, wobei jeder Nachbarschaftsbeziehungs-Eintrag einen insbesondere voll qualifizierten Domain Namen des jeweiligen Gerätes (1, 2, 3) und wenigstens einen zugehörigen topologischen Nachbar-Domain-Namen, der einen insbesondere voll qualifizierten Domain Namen eines zu dem jeweiligen Gerät (1, 2, 3) benachbarten Nachbargerätes (1, 2, 3) als Nachbar-Gerätenamen und den Namen des Portes (4, 5) des Nachbargerätes (1, 2, 3), mit dem das jeweilige Gerät (1, 2, 3) verbunden ist und/oder den Namen des Portes (4, 5) des jeweiligen Gerätes (1, 2, 3), über den es mit dem Nachbar-Gerät (1, 2, 3) verbunden ist, und insbesondere wenigstens einen vorgegebenen weiteren Namensbestandteil aufweist, umfasst.

12. Verfahren nach Anspruch 11,
**dadurch gekennzeichnet, dass** jeder Nachbarschaftsbeziehungs-Eintrag durch ein Pointer Resource Record gegeben ist oder einen solchen umfasst, wobei bevorzugt jeder Pointer Resource Record von einem topologischen Nachbar-Domain-Namen auf einen insbesondere voll qualifizierten Domain Namen eines Gerätes (1, 2, 3) zeigt.

13. Verfahren nach Anspruch 11 oder 12,
**dadurch gekennzeichnet, dass** der topologische Nachbar-Domain-Name in jedem Nachbarschaftsbeziehungs-Eintrag dem Muster Portname gefolgt von einem Punkt gefolgt von dem vorgegebenen weiteren Namensteil gefolgt von einem Punkt gefolgt von dem Nachbar-Gerätenamen erstellt wird.

14. Verfahren nach einem der Ansprüche 11 bis 13,
**dadurch gekennzeichnet, dass** wenigstens eine Nachbarschaftsbeziehungs-Datei (22) von einem zentralen Engineering-Werkzeug, mit welchem das Netzwerk, an dem die zu den Nachbarschaftsbeziehungs-Einträgen gehörigen Geräte (1, 2, 3) teilnehmen, aufgebaut wurde, bereitgestellt und anschließend an den Namensdienst-Server (9) übertragen wird.

15. Verfahren nach einem der Ansprüche 11 bis 14,
**dadurch gekennzeichnet, dass** wenigstens eine Nachbarschaftsbeziehungs-Datei (22) von einem zentralen Online-Tool (23), von dem eine Topologie-Discovery eines gegebenen Netzwerkes durchgeführt und auf Basis des Ergebnisses der Topologie-Discovery die Nachbarschaftsbeziehungs-Datei (22) erstellt wird, bereitgestellt, und anschließend an den Namensdienst-Server (9) übertragen wird.

16. Verfahren nach einem der Ansprüche 11 bis 15,
**dadurch gekennzeichnet, dass** wenigstens eine Nachbarschaftsbeziehungs-Datei (22) auf Basis von Nachbarschafts-Informationen erstellt wird, die von denjenigen Geräten (1, 2, 3) eines Netzwerkes an den Namensdienst-Server (9) übermittelt werden, die ihren Geräte-Namen nicht unter Durchführung des Verfahrens nach einem der Ansprüche 1 bis 9 sondern von einer externen Quelle, insbesondere via DCP oder DHCP oder von einem lokalen Namens-Vergabe-Mechanismus erhalten haben.

17. Verwendung eines Namensdienst-Servers, insbesondere DNS-Servers (9), zur Bereitstellung von Topologie-Informationen für die Selbsttaufe von Geräten (1, 2, 3) in einem insbesondere industriellen Netzwerk, bevorzugt einer industriellen Automatisierungsanlage.

18. Gerät (1, 2, 3), insbesondere Automatisierungsgerät, welches zur Durchführung des Verfahrens nach einem der Ansprüche 1 bis 10 ausgebildet und eingerichtet ist.

19. Gerät (1, 2, 3)nach Anspruch 18,
**dadurch gekennzeichnet, dass** das Gerät (1, 2, 3) wenigstens einen Port (4, 5) aufweist, über den es mit einem Port (4, 5) eines weiteren, ein Nachbar-Gerät darstellenden Gerätes (1, 2, 3) verbindbar oder verbunden ist, und das Gerät (1, 2, 3) ein Selbsttaufe-Modul (7) aufweist, welches dazu ausgebildet und/oder eingerichtet ist, um
a) auf Basis einer von einem Nachbargerät (1, 2, 3) an das Gerät (1, 2, 3) gesendeten Nachbar-Namensnachricht (8), die zumindest einen Gerätenamen des Nachbargerätes (1, 2, 3) und optional einen Namen desjenigen Ports (4, 5) des Nachbargerätes (1, 2, 3), über welchen die Nachbar-Namensnachricht an das Gerät (1, 2, 3) gesendet wird oder wurde, umfasst, einen topologischen Nachbar-Domain-Namen, welcher zumindest den empfangenen Nachbar-Gerätenamen und den optional empfangenen Nachbar-Portnamen und/oder den Namen des Portes des Gerätes (1, 2, 3), über welchen das Gerät (1, 2, 3) die Nachbar-Namensnachricht (8) empfangen hat, und einen insbesondere dem Selbsttaufe-Modul (7) bekannten, vorgegebenen weiteren Namensteil umfasst, erstellt,
b) den topologischen Nachbar-Domain-Namen an einen Namensdienst-Server, insbesondere einen DNS Sever (9), bevorzugt im Rahmen einer DNS Query (10), zu übermitteln,
c) von dem Namensdienst-Server (9) insbesondere im Rahmen einer weiteren DNS Query eine Antwort-Nachricht (11), welche wenigstens einen zu dem topologischen Nachbar-Domain-Namen gehörenden Gerätenamen des Gerätes (1, 2, 3) umfasst, zu erhalten, und
d) wenigstens einen Gerätename aus der Antwort-Nachricht (11) dem Gerät (1, 2, 3) zuzuweisen, insbesondere auf dem Gerät (1, 2, 3) als Gerätenamen zu speichern.

20. Computerprogramm umfassend Programmcode-Mittel zur Durchführung des Verfahrens nach einem der Ansprüche 1 bis 16.

21. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 16 durchzuführen.
